# EUROPÄISCHE PATENTANMELDUNG

(11) **EP 4 483 760 A1**
(43) Veröffentlichungstag der Anmeldung: **01.01.2025**
(21) Anmeldenummer: 24184694.8
(22) Anmeldetag: 26.06.2024
(51) Int. Cl.: A47J 36/36

(54) **ANORDNUNG ZUM THERMISCHEN ISOLIEREN EINES KOCHTOPFES GEGENÜBER DER UMGEBUNG**

(30) Priorität: 27.06.2023 DE 102023116856
(71) Anmelder: GROTJAN, Felix, 26844 Jemgum (DE)
(72) Erfinder: GROTJAN, Felix, 26844 Jemgum (DE)

(57) **Zusammenfassung**

Anordnung zum thermischen Isolieren eines Kochtopfes gegenüber der Umgebung, umfassend ein flächiges Isoliermaterial zum Anlegen an den Kochtopf.

Gerade bei heißen Herden, wie Elektroherden oder Gasherden, ist sicher zu verhindern, dass das Isoliermaterial mit der Hitzequelle in Verbindung kommt.

Der Erfindung liegt die Aufgabe zugrunde, eine Anordnung zum thermischen Isolieren eines Kochtopfes der eingangs genannten Gattung aufzuzeigen, bei der das Isoliermaterial sicher an den Kochtopf angelegt ist.

## Beschreibung

Die Erfindung betrifft eine Anordnung zum thermischen Isolieren eines Kochtopfes gegenüber der Umgebung, umfassend ein flächiges Isoliermaterial zum Anlegen an den Kochtopf.

Kochtöpfe werden zum Zubereiten von Speisen verwendet. Sie werden dazu auf einen Herd gestellt, beispielsweise einen Gasherd oder einen elektrischen Herd mit einem Ceranfeld oder mit einem Induktionsfeld. In jedem Fall wird in den Kochtopf über dessen Boden Wärme eingetragen, um die im Kochtopf enthaltenen Speisen zu erwärmen beziehungsweise zu erhitzen.

Dabei geht in den Kochtopf eingebrachte Wärme über die Topfwände des Kochtopfes verloren. Aus den bereits erhitzten Speisen kann Wärme nach außen austreten, auch vom Topfboden in die Topfwände geleitete Wärme tritt zu einem großen Teil nach außen in die Umgebung ab.

Um dem entgegenzutreten, sind bereits Anordnungen der eingangs genannten Gattung aufgezeigt worden. So wurden flächige Isoliermaterialien an Kochtöpfe angelegt, beispielsweise in der DE 20 2014 001 976 U1. Die dort vorhandenen Isoliermaterialien wurden auf Passung zum Kochtopf angefertigt, so dass sie sich an diesen haltend anschmiegen können.

Diese Verbindung zwischen Isoliermaterial und Kochtopf ist unzureichend. Gerade bei heißen Herden, wie Elektroherden oder Gasherden, ist sicher zu verhindern, dass das Isoliermaterial mit der Hitzequelle in Verbindung kommt. Das Isoliermaterial darf also nicht in die Ebene des Bodens des Kochtopfes absinken, so dass es dann auf einer heißen Quelle aufsteht.

Der Erfindung liegt die Aufgabe zugrunde, eine Anordnung zum thermischen Isolieren eines Kochtopfes der eingangs genannten Gattung aufzuzeigen, bei der das Isoliermaterial sicher an den Kochtopf angelegt ist.

Diese Aufgabe ist erfindungsgemäß dadurch gelöst, dass das Isoliermaterial in seinen Bereichen, die bei seiner Anlage an den Kochtopf Griffelementen des Kochtopfes angenähert sind, Befestigungsmittel zum Festlegen der Anlage des Isoliermaterials an den Kochtopf aufweist.

Bei der erfindungsgemäßen Anordnung wird nicht eine flächige, passende Anlage des Isoliermaterials am Kochtopf angestrebt, vielmehr sind spezielle Befestigungsmittel vorgesehen. Diese Befestigungsmittel sind ihrerseits am Isoliermaterial angeordnet, dies in Bereichen des Isoliermaterials, die bei der Anlage des Isoliermaterials an den Kochtopf Griffelementen des Kochtopfes angenähert sind. Diese Griffelemente werden also zur Festlegung des Isoliermaterials am Kochtopf eingesetzt, dies mit Hilfe der Befestigungsmittel.

Damit ist eine lagefeste Anordnung des Isoliermaterials am Kochtopf ermöglicht. Ein Abrutschen des Isoliermaterials in Bereiche der Hitzequelle wird vorteilhaft vermieden.

Nach einer ersten Weiterbildung der Erfindung ist vorgesehen, dass das Isoliermaterial als Hohlzylinder ausgebildet ist. Der Hohlzylinder hat einen Innendurchmesser, der etwas größer als der Außendurchmesser eines Kochtopfes ist, für den das Isoliermaterial eingesetzt werden soll. Der Kochtopf kann beispielsweise von oben in das hohlzylinderförmige Isoliermaterial eingesetzt werden.

Vorzugsweise hat der Hohlzylinder an einer seiner Umfangsrandflächen Vertiefungen. Bei der Umfangsrandfläche kann es sich um den oberen Rand des Isoliermaterials handeln, in das der Kochtopf eingeführt wird. Die Vertiefungen können bei diesem Einführen Vorsprünge des Kochtopfes aufnehmen, die andernfalls dem Einführen entgegenstehen würden.

Die Vertiefungen können eine spezielle Ausgestaltung haben, so kann die Breite einer Vertiefung auf dem Umfang des Hohlzylinders größer als die Breite eines Griffelementes auf dem Umfang des Kochtopfes sein. Insoweit kann der Kochtopf also in das hohlzylinderförmige Isoliermaterial eingeführt werden, ein an der Außenseite des Kochtopfes befindliches Griffelement kann dann in die Vertiefung im Umfangsrand des Hohlzylinders eingeführt werden. Das Griffelement wird in die Vertiefung eingeführt und legt sich auf einem Boden der Vertiefung ab. Dabei wird der Boden der Vertiefung in Bezug auf die Gesamthöhe des Isoliermaterials so in einem Abstand zur Umfangsrandfläche bemessen sein, dass bei Auflage des Griffelementes auf dem Boden der Vertiefung der Kochtopf mit seinem Boden aus dem Isoliermaterial vorsteht. Nur der Kochtopf soll auf einem heißen Ceranfeld aufstehen, nicht aber die Isolierung.

Die Befestigungsmittel können dann zum Beispiel die Griffelemente übergreifende Kniehebelverschlüsse oder Riegelverschlüsse umfassen. Ein Riegelverschluss kann dabei an die Hohlzylinderform angepasst sein. Die Befestigungsmittel können auch einfacher, ohne zusätzliche Bauelemente von Verschlüssen ausgebildet sein. Man kann eine vorgesehene Vertiefung eine seitliche Ausweitung haben. Die Vertiefung wird also auf dem Umfange des Isoliermaterials verlängert, so dass sich eine Hinterschneidung im Isoliermaterial ausbildet. Dabei wird ein Bajonettverschluss geschaffen, das Griffelement des Kochtopfes kann durch ein Verdrehen des Kochtopfes in diese seitliche Ausweitung der Vertiefung eingeführt werden.

Nach einer alternativen Ausbildung der Erfindung ist das Isoliermaterial als bahnförmiges Wickelelement für eine Anlage an den Wänden des Kochtopfes ausgebildet. Das bahnförmige Wickelelement wird um den Kochtopf herumgewickelt, so dass es eine voll umfängliche Isolation ausbildet.

Für die Griffelemente des Kochtopfes können Ausschnitte im Wickelmaterial vorgesehen sein. Die Ausschnitte können so bemessen sein, dass sie gerade die Griffelemente des Kochtopfes in sich aufnehmen können und insoweit mit den Wandungsabschnitten der Ausschnitte Befestigungsmittel zum Festlegen der Anlage des Isoliermaterials an den Kochtopf aufweisen.

Nach einer nächsten Weiterbildung der Erfindung ist vorgesehen, dass weitere Befestigungsmittel Klettverschlüsse umfassen. Diese können auf dem bahnförmigen Wickelelement angeordnet sein und in aufeinanderliegenden Abschnitten des bahnförmigen Wickelelementes aneinander anliegend und insofern die Wickelstellung fixieren.

Schließlich kann vorgesehen sein, dass das Isoliermaterial einen separaten Abschnitt zum Auflegen auf einen Topfdeckel hat und dass dieser Abschnitt einen Ausschnitt für ein Griffelement des Topfdeckels aufweist. Bei dieser Ausgestaltung kann auch der Topfdeckel des Kochtopfes isoliert werden. Der separate Abschnitt wird auf den Topfdeckel von außen aufgelegt, der Ausschnitt für das Griffelement bildet das Befestigungsmittel zum Festlegen der Anlage aus. Der Ausschnitt ist so bemessen, dass er sich eng an das Griffelement des Topfdeckels anschmiegt und insoweit eine Lagesicherung für den separaten Abschnitt ausbildet.

Das Isoliermaterial kann an seiner dem Kochtopf anzunähernden Seite noch Abstandshalter aufweisen. Diese Abstandshalter können beispielsweise als Noppen als Rippen ausgebildet sein, sie bewirken jeweils das Ausbilden eines Abstandes zwischen der Außenseite des Kochtopfes und der Innenseite des Isoliermaterials. Dadurch bildet sich zwischen Kochtopf und Isoliermaterial eine Luftschicht, die als zusätzlicher Wärmeisolator wirkt.

Zur weiteren Ausbildung der Erfindung kann noch vorgesehen sein, dass das Isoliermaterial mehrschalig aus Metall mit integrierter Dämmung oder aus einem hitzebeständigen Verbundwerkstoff gefertigt ist. Bei der mehrschaligen Ausbildung kann als integrierte Dämmung ein Gas wie Luft als Dämmmaterial verwendet werden. Möglich ist auch, dass in ein mehrschaliges Isoliermaterial ein Vakuum als Wärmedämmung eingebracht wird. Alternativ ist für das bahnförmige Wickelelement eine Ausbildung aus hitzebeständigen Silikonmatten möglich.

Ausführungsbeispiele der Erfindung sind in der Zeichnung dargestellt. Es zeigen:
- Figur 1 und Figur 2:: Seitenansichten eines Kochtopfes mit einem Isoliermaterial nach einem ersten Ausführungsbeispiel,
- Figur 3 und Figur 4:: Seitenansichten eines Kochtopfes mit einem weiteren Isoliermaterial nach einem zweiten Ausführungsbeispiel,
- Figur 5:: eine Schnittansicht des Kochtopfes mit Isoliermaterial gemäß Figur 4,
- Figur Sa und Figur Sb:: Seitenansichten eines Kochtopfes mit einem weiteren Isoliermaterial nach einem dritten Ausführungsbeispiel,
- Figur 6:: eine Seitenansicht eines Kochtopfes mit einem Isoliermaterial nach einem vierten Ausführungsbeispiel, und
- Figur 7:: eine Schnittansicht von Kochtopf und Isoliermaterial entlang einer Schnittlinie A-A in Figur 6.

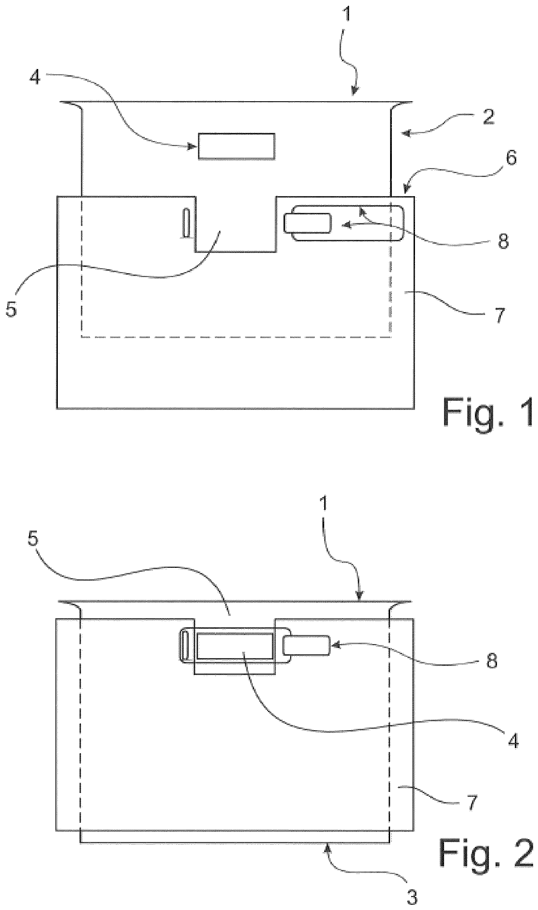

Der Kochtopf 1 in Figur 1 hat Topfwände 2 und einen Topfboden 3, siehe Figur 2. An der Außenwand der Topfwand 2 ist ein Griffelement 4 angeordnet. Dieses Griffelement 4 ist in Figur 1 einer Vertiefung 5 angenähert, die in die obere Umfangsrandfläche 6 eines als Hohlzylinder ausgebildeten Isoliermaterials 7 eingebracht ist.

Das Isoliermaterial 7 stellt einen Hohlzylinder zur Verfügung, dessen Innendurchmesser etwas größer ist als der Außendurchmesser des Kochtopfes 1. Figur 1 zeigt, dass der Kochtopf 1 in das Isoliermaterial 7 eingeschoben wird, dabei erfolgt ein Einschieben des Griffelementes 4 in die Vertiefung 5.

An der Außenseite des Isoliermaterials 7 sind Befestigungsmittel angeordnet. Diese Befestigungsmittel umfassen in Figur 1 und in Figur 2 einen Kniehebelverschluss 8.

Figur 2 zeigt den vollständig in das Isoliermaterial 7 eingeführten Kochtopf 1. Der Topfboden 3 ist frei vom Isoliermaterial 7, da dies eine geringere Bauhöhe als die Bauhöhe des Kochtopfes 1 hat. Die in Figur 2 gezeigte Lage des Isoliermaterials 7 wird mit dem Kniehebelverschluss 8 festgelegt. In Figur 2 ist der Kniehebelverschluss 8 geschlossen. Er übergreift das Griffelement 4 des Kochtopfes 1. Der an das Griffelement 4 angelegte Bügel des Kniehebelverschlusses 8 verhindert ein Absinken des Isoliermaterials 7 an den Topfwänden 2 des Kochtopfes 1.

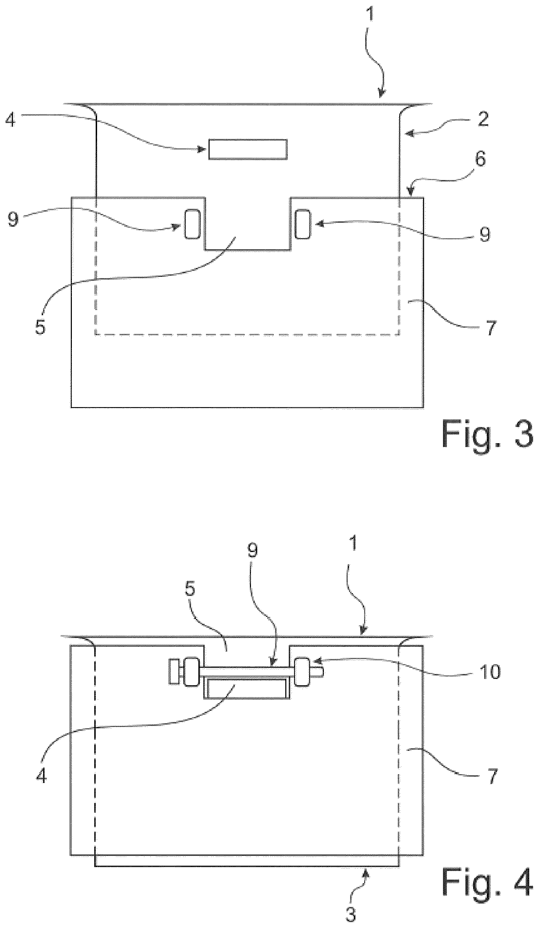

Bei dem zweiten Ausführungsbeispiel in den Figuren 3 und 4 ist ein abweichendes Befestigungsmittel zum Festlegen der Anlage des Isoliermaterials 7 vorgesehen. Dort wird ein Riegelverschluss 9 eingesetzt, dessen Riegelstange in Ösen 10 geführt wird. Die Riegelstange des Riegelverschlusses 9 wird oberhalb des Griffelementes 4 durch die Ösen 10 geführt, so dass sich die Riegelstange des Riegelverschlusses 9 auf das Griffelement 4 auflegen kann. Die Ösen 10 sind am Isoliermaterial 7 befestigt, das somit gleichfalls auf dem Griffelement 4 aufliegt. Der Topfboden 3 ist wieder frei vom Isoliermaterial 7.

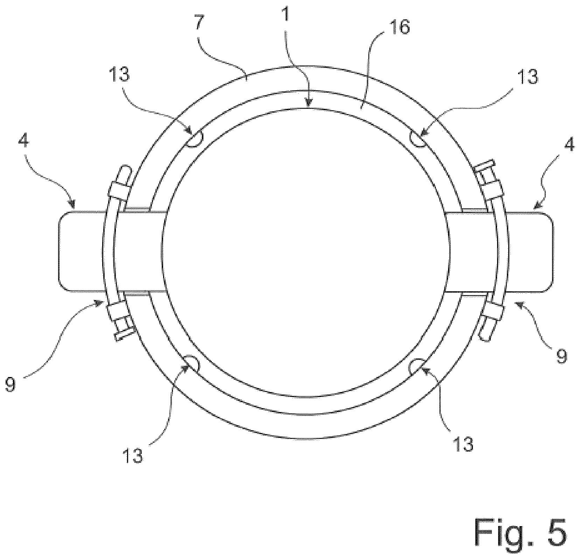

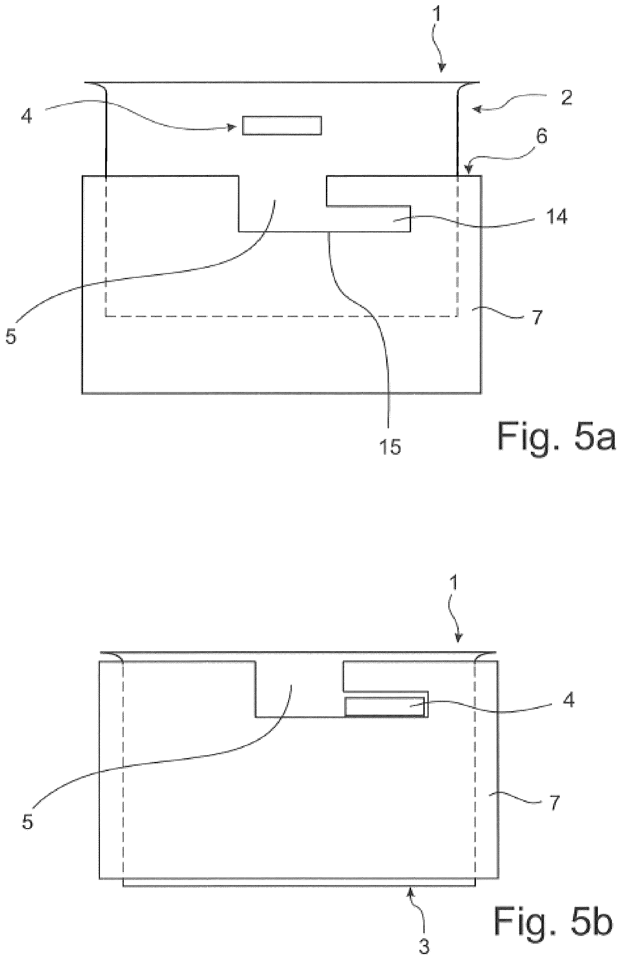

Figur 5 zeigt, dass die Riegelstange des Riegelverschlusses 9 gebogen ist und sich somit an die Hohlzylinderform des Isoliermaterials 7 anpasst. Figur 5 zeigt außerdem, dass der Kochtopf 1 zwei Griffelemente 4 hat, so dass auch zwei Riegelverschlüsse 9 notwendig sind. Figur 5 zeigt noch, dass an der dem Kochtopf 1 zugekehrten Innenseite des Isoliermaterials 7 Abstandshalter 13 zum Ausbilden eines Luftspalts 16 angeordnet sind. Diese Abstandshalter 13 können auch bei den Isoliermaterialien der anderen Ausführungsbeispiele vorgesehen sein.

Das dritte Ausführungsbeispiel der erfindungsgemäßen Anordnung zeigt in dem Isoliermaterial 7 eine Vertiefung 5, die eine seitliche Erweiterung 14 hat. Mit dieser seitlichen Erweiterung ist durch die Vertiefung 5 ein Bajonettverschluss ausgebildet. Das Griffelement 4 des Kochtopfes 1 kann zunächst in die Vertiefung 5 eingeführt werden, bis es auf dem Boden 15 der Vertiefung aufliegt. Figur 5 b zeigt, dass der Kochtopf 1 innerhalb des Isoliermaterials 7 verdreht wurde, so dass das Griffelement 4 in die Erweiterung 14 der Vertiefung eingeschoben wurde. Mit Abschnitten oberhalb der Erweiterung 14 liegt das Isoliermaterial auf dem Griffelement 4 auf, der Topfboden 3 steht aus der Isolierung 7 frei vor.

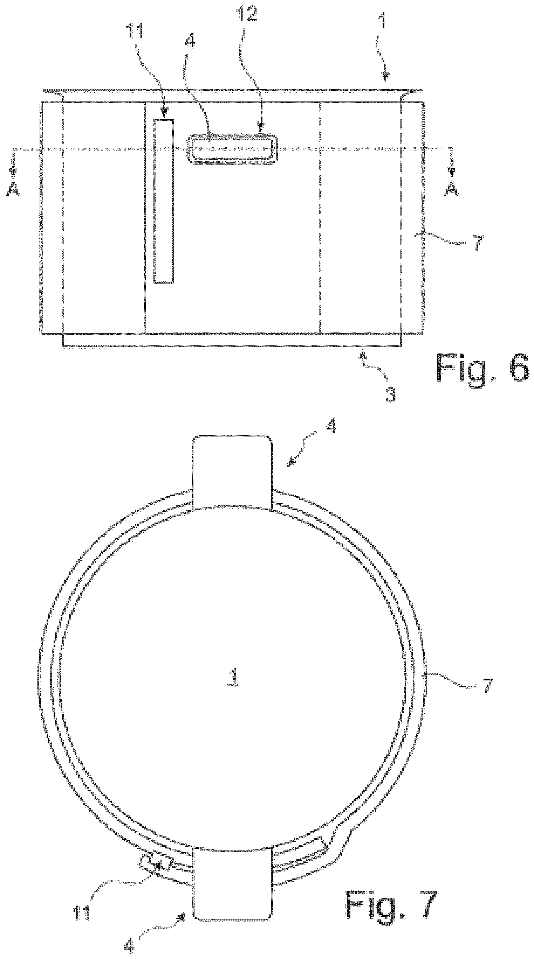

Bei dem vierten Ausführungsbeispiel in den Figuren 6 und 7 ist das Isoliermaterial 7 als bahnförmiges Wickelelement ausgebildet. Dieses wird um den Kochtopf 1 herumgelegt, es liegt abschnittsweise zweilagig aufeinander, wie Figur 7 zeigt. In diesem Bereich kann in der Nähe eines Griffelementes 4 des Kochtopfes 1 ein Befestigungsmittel vorgesehen sein, dies kann als Klettverschluss 11 ausgebildet sein. Figur 6 zeigt noch, dass im wickelförmigen Isoliermaterial 7 Ausschnitte 12 für Griffelemente 4 des Kochtopfes 1 angeordnet sind.

Ein als bahnförmiges Wickelelement ausgebildetes Isoliermaterial 7 in den Figuren 6 und 7 kann mit größerer Baulänge zum zweilagigen Umwickeln des Kochtopfes 1 ausgebildet sein.

## Patentansprüche

1. Anordnung zum thermischen Isolieren eines auf einen Herd aufzustellenden Kochtopfes gegenüber der Umgebung, umfassend ein flächiges Isoliermaterial zum Anlegen an den Kochtopf,
**dadurch gekennzeichnet,**
**dass** das Isoliermaterial (7) in seinen Bereichen, die bei seiner Anlage an den Kochtopf (1) Griffelementen (4) des Kochtopfes (1) angenähert sind, Befestigungsmittel zum Festlegen der Anlage des Isoliermaterials (7) gegen ein Abrutschen an dem Kochtopf (1) aufweist.

2. Anordnung nach Anspruch 1, **dadurch gekennzeichnet, dass** das Isoliermaterial (7) als Hohlzylinder ausgebildet ist.

3. Anordnung nach Anspruch 2, **dadurch gekennzeichnet, dass** der Hohlzylinder in einer seiner Umfangsrandflächen (6) Vertiefungen (5) hat.

4. Anordnung nach Anspruch 3, **dadurch gekennzeichnet, dass** die Breite einer Vertiefung (5) auf dem Umfang des Hohlzylinders größer ist als die Breite eines Griffelementes (4) des Kochtopfes (1) auf dem Umfang des Kochtopfes (1).

5. Anordnung nach einem der vorhergehenden Ansprüche, **dadurch gekennzeichnet, dass** die Befestigungsmittel Kniehebelverschlüsse (8) umfassen.

6. Anordnung nach einem der Ansprüche 1 bis 4, **dadurch gekennzeichnet, dass** die Befestigungsmittel Riegelverschlüsse (9) umfassen.

7. Anordnung nach Anspruch 3, **dadurch gekennzeichnet, dass** die Vertiefung (5) eine seitliche Ausweitung zum Ausbilden eines Bajonettverschluss hat

8. Anordnung nach Anspruch 1, **dadurch gekennzeichnet, dass** das Isoliermaterial (7) als bahnförmiges Wickelelement für eine Anlage an den Topfwänden (2) des Kochtopfes (1) ausgebildet ist.

9. Anordnung nach Anspruch 8, **dadurch gekennzeichnet, dass** das Wickelmaterial Ausschnitte (12) für die Griffelemente (4) des Kochtopfes (1) hat.

10. Anordnung nach Anspruch 8 oder 9, **dadurch gekennzeichnet, dass** die Befestigungsmittel Klettverschlüsse (11) umfassen.

11. Anordnung nach einem der vorhergehenden Ansprüche, **dadurch gekennzeichnet, dass** das Isoliermaterial (7) einen separaten Abschnitt zum Auflegen auf einen Topfdeckel hat und dass dieser Abschnitt einen Ausschnitt für ein Griffelement (4) des Topfdeckels aufweist.

12. Anordnung nach einer der vorhergehenden Ansprüche, **dadurch gekennzeichnet, dass** das Isoliermaterial an seiner dem Kochtopf (1) anzunähernden Seite Abstandshalter (13) aufweist.

13. Anordnung nach einem der Ansprüche 1 bis 7, **dadurch gekennzeichnet, dass** das Isoliermaterial (7) mehrschalig aus Metall mit integrierter Dämmung oder aus hitzebeständigen Verbundwerkstoffen gefertigt ist.

14. Anordnung nach einem der Ansprüche 8 bis 12, **dadurch gekennzeichnet, dass** das Isoliermaterial (7) aus hitzebeständigen Silikonmatten ausgebildet ist.
